# FASCICULE DE BREVET EUROPEEN

(11) **EP 3 472 911 B1**
(45) Date de publication et mention de la délivrance du brevet: **21.10.2020**
(21) Numéro de dépôt: 17730421.9
(22) Date de dépôt: 02.06.2017
(51) Int. Cl.: B60L 53/30

(54) **PROCEDE ET SYSTEME DE GESTION DE BATTERIES ELECTROCHIMIQUES D'UNE INSTALLATION D'ALIMENTATION ELECTRIQUE EN CAS DE DEFAILLANCE DE BATTERIE(S).**
VERFAHREN UND SYSTEM ZUR VERWALTUNG VON ELEKTROCHEMISCHEN BATTERIEN EINER STROMVERSORGUNGSANLAGE IM FALL EINES BATTERIEAUSFALLS
METHOD AND SYSTEM FOR MANAGING ELECTROCHEMICAL BATTERIES OF A POWER SUPPLY FACILITY IN CASE OF BATTERY FAILURE.

(30) Priorité: 16.06.2016 FR 1655626
(43) Date de publication de la demande: 24.04.2019
(73) Titulaire: Blue Solutions, 29500 Ergué Gabéric (FR)
(72) Inventeur: SELLIN, Christian, 29900 Concarneau (FR); JESTIN, Jean-Jacques, 29170 Fouesnant (FR); TAN, Tony, 35000 Rennes (FR); AGNUS, Yvan, 29000 Quimper (FR); BRUNET, Gilles, 29710 Ploneis (FR); THOMAS, Michel, 29710 Pouldreuzic (FR); HINGANT, Dominique, 29140 SAINT YVI (FR)
(74) Mandataire: IPAZ
(86) Numéro de dépôt international: PCT/EP2017/063545
(87) Numéro de publication internationale: WO 2017/215967

(56) Documents cités:
- WO-A1-2013/006164
- WO-A1-2015/107136
- WO-A2-2014/187844
- FR-A1- 2 691 022
- US-A1- 2013 076 294
- US-A1- 2016 075 254

## Description

La présente invention concerne un procédé de gestion des batteries électrochimiques d'une installation d'alimentation électrique en cas de défaillance de batterie(s). Elle concerne également un système mettant en œuvre un tel procédé et une installation d'alimentation mettant en œuvre un tel procédé ou un tel système.

Le domaine de l'invention est le domaine des installations d'alimentation électrique comprenant plusieurs batteries électrochimiques, en particulier de type LMP® (pour « Lithium Métal Polymère »), montées en parallèle, pour fournir un signal d'alimentation.

### Etat de la technique

On connait des installations d'alimentation électrique stationnaires comprenant plusieurs modules de stockage d'électricité montés en parallèle et comprenant chacun une ou plusieurs batteries électrochimiques, en particulier de type LMP®. Chaque module permet d'emmagasiner de l'énergie électrique puis de délivrer un signal haute-tension, par exemple pour recharger un véhicule électrique ou pour alimenter un bâtiment.

Certaines installations électriques stationnaires sont autonomes et couplent des moyens de production d'énergie, tel que des panneaux solaires ou des éoliennes par exemple, avec les modules de stockage de l'énergie électrique, en vue de recharger lesdits modules.

Pour assurer une autonomie suffisante en terme d'alimentation, il est nécessaire d'équiper chaque installation de plusieurs batteries permettant d'emmagasiner l'énergie électrique nécessaire à l'autonomie souhaitée, pour ensuite la délivrer à une entité à alimenter telle qu'un véhicule électrique à recharger, ou à un complexe ou un bâtiment à alimenter. En fonction de la puissance souhaitée lors de l'alimentation, et de la puissance disponible au niveau de chaque batterie, il peut être nécessaire d'utiliser plusieurs batteries en parallèle lors de l'alimentation. Un exemple est le document US 2016/075254 A1 décrivant l'utilisation de plusieurs modules et connectant ou déconnectant les modules en fonction de leur état de charge. Les batteries utilisée sont des batteries Lithium n'ayant pas les contraintes des batteries Lithium Métal Polymère.

Dans le même temps, on sait que les batteries électrochimiques supportent mal une décharge lente.

Cependant, à l'heure actuelle, il n'existe aucun procédé de gestion des modules de stockage d'énergie électrique rechargeables d'une installation d'alimentation électrique stationnaire, dans laquelle ces modules sont disposés en parallèle, permettant d'optimiser la durée de vie desdits modules, tout en préservant le fonctionnement de l'installation.

Un but de la présente invention est de remédier à cet inconvénient.

Un autre but de l'invention est de proposer un procédé et un système permettant une meilleure gestion des modules de stockage d'énergie électrique d'une installation d'alimentation électrique, montés en parallèle, en cas de défaillance d'au moins un des modules.

Il est aussi un but de l'invention de proposer un procédé et un système de gestion des modules de stockage d'énergie électrique d'une installation d'alimentation électrique, montés en parallèle, permettant d'optimiser la durée de vie desdits modules tout en maintenant un fonctionnement normal de ladite installation, en cas de défaillance d'au moins un desdits modules.

### Exposé de l'invention

L'invention permet d'atteindre au moins l'un de ces buts par un procédé de gestion d'une pluralité de modules de stockage d'énergie électrique rechargeables d'une installation d'alimentation électrique, en particulier stationnaire, lesdits modules comprenant, chacun, au moins une batterie électrochimique rechargeable, en particulier de type LMP®, et étant agencés en parallèle les uns avec les autres, ledit procédé comprenant :
- une séparation desdits modules en au moins deux groupes, et
- une alimentation à partir d'un desdits groupes à la fois, et en particulier à tour de rôle, et encore plus particulièrement de manière alternée ;
ledit procédé comprenant en outre une étape de remplacement d'un module défaillant d'un groupe, dit groupe actif, en cours d'alimentation, par un module disponible d'un autre groupe, dit groupe disponible.

Ainsi, le procédé selon l'invention propose de séparer, virtuellement, les modules de stockage d'énergie électrique rechargeables en plusieurs, en particulier en deux, groupes utilisés à tour de rôle pour l'alimentation, en particulier pour recharger un véhicule électrique, alimenter un bâtiment, alimenter un complexe, alimenter un appareil électrique/électronique, en particulier de communication tel qu'une borne wifi ou une antenne. Ainsi, il est possible d'appliquer des cycles de décharge rapide à chaque groupe et ainsi d'optimiser la durée de vie de chaque module.

Dans le même temps, en cas de défaillance d'un ou de plusieurs modules, le procédé selon l'invention propose une gestion « virtuelle » d'au moins un des groupes. En particulier, lorsqu'un module faisant initialement partie d'un premier groupe est défaillant, le procédé propose de le remplacer, en particulier à la volée, par un module faisant initialement partie d'un autre groupe. Ainsi, il est possible continuer à délivrer la puissance demandée et donc d'exploiter normalement l'installation, même en cas de défaillance d'un ou plusieurs modules, sans dégradation des modules de stockage d'énergie électrique.

Dans la présente demande, par « séparation » on entend un regroupement virtuel des modules, indépendamment de leur disposition physique.

Dans la présente demande, on considère qu'un module de stockage est défaillant lorsque ledit module présente :
- un dysfonctionnement, en particulier une température anormale ou une tension anormale à ses bornes ; ou
- un niveau de charge restante (NCR) nul ou très faible.
Le niveau de charge restante peut être confondu avec un niveau de jauge signalant un pourcentage ou une quantité de charge restante dans le module de stockage.

Suivant une version du procédé selon l'invention, l'étape de remplacement peut être réalisée dès qu'un des groupes comporte un module défaillant.

Autrement dit, dans cette première version, lorsqu'un premier module est défaillant dans l'un quelconque des groupes, l'étape de remplacement est réalisée, même si aucun module n'est défaillant dans les autres groupes. Le module défaillant du groupe est alors remplacé par un module disponible d'un autre groupe.

Le module remplaçant le module défaillant du groupe actif peut être choisi à tour de rôle dans chacun des autres groupes.

De plus, au sein même d'un groupe disponible, le module utilisé pour remplacer le module défaillant d'un groupe actif peut être choisi à tour de rôle parmi les modules dudit groupe disponible.

Suivant une autre version, préférée, du procédé selon l'invention, l'étape de remplacement peut être réalisée uniquement lorsque chaque groupe comporte un module défaillant, c'est-à-dire lorsqu'il n'existe plus aucun groupe dont tous les modules sont fonctionnels.

Dans ce cas, lorsqu'un premier groupe actif comporte un module défaillant, l'alimentation peut être basculée sur un autre groupe ne comportant aucun module défaillant, cet autre groupe devenant alors le groupe actif, et ainsi de suite.

Le groupe comportant le module défaillant peut ne plus être utilisé pour l'alimentation tant qu'il existe d'autres groupes dont tous les modules sont fonctionnels, c'est-à-dire non défaillant. L'alimentation peut être assurée uniquement avec le(s) groupe(s) dont tous les modules sont fonctionnels, en particulier à tour de rôle, sans utilisation du groupe dont le module est défaillant.

Eventuellement, lorsque le(s) groupe(s), dont tous les modules sont fonctionnels, est(sont) complétement déchargé(s), alors le groupe dont le module est défaillant peut être utilisé pour assurer une alimentation dégradée dans un mode de fonctionnement dégradé.

Dans une version préférée du procédé selon l'invention, l'étape de remplacement peut être réalisée de sorte que le nombre total de modules dans le groupe actif est maintenu constant, et égal à un nombre prédéterminé.

Autrement dit, l'étape de remplacement peut être réalisée de sorte que la puissance délivrée lors de l'alimentation est maintenue constante, et égale à une valeur prédéterminée.

Ainsi, le procédé selon l'invention permet de maintenir la puissance fournie par le groupe actif, ce qui permet de maintenir un mode de fonctionnement normal, sans souffrir d'aucune dégradation.

Suivant un mode de réalisation non limitatif, le procédé selon l'invention peut comprendre un basculement de l'alimentation d'un groupe à l'autre, réalisé en fonction des niveaux de charge restante desdits groupes.

Plus particulièrement, le basculement d'un groupe à l'autre peut être réalisé lorsque le niveau de charge restante du groupe actif est inférieur ou égal au niveau de charge restante d'au moins un groupe disponible, en particulier d'une valeur prédéterminée.

Avantageusement, la valeur prédéterminée peut correspondre à un pourcentage d'une capacité de charge maximale (CCM), ou d'un niveau de charge restante (NCR), de l'un au moins des groupes.

Suivant un premier exemple de réalisation, la valeur prédéterminée peut être constante.

Par exemple, la valeur prédéterminée peut être égale à 5% de la CCM d'un groupe.

Suivant un autre exemple de réalisation, la valeur prédéterminée peut être variable.

Plus particulièrement, la valeur prédéterminée peut être fonction du niveau de charge totale disponible au niveau de chaque groupe.

En particulier, la valeur prédéterminée peut diminuer lorsque le niveau de charge totale au niveau de chaque groupe diminue.

Suivant un exemple de réalisation non limitatif, la valeur prédéterminée peut être égale à :
- 10% de la CCM d'un groupe lorsque tous les groupes présentent un NCR supérieur à 70% ;
- 8% de la CCM d'un groupe lorsque le groupe le moins chargé présente un NCR compris entre 50% et 70% ;
- 5% de la CCM d'un groupe lorsque le groupe le moins chargé présente un NCR compris entre 30% et 50% ; et
- 3% de la CCM d'un groupe lorsque le groupe le moins chargé présente un NCR inférieur à 30%.

Dans une version préférée, chaque groupe peut comprendre un nombre identique de modules.

Le nombre de module peut être déterminé en fonction d'une puissance totale souhaitée lors de l'étape d'alimentation et de la puissance qui peut être délivrée par chaque module.

Dans une version préférée, tous les modules peuvent être identiques et délivrer, chacun, une même puissance nominale.

Le procédé selon l'invention peut en outre comprendre une détection d'une défaillance, et en particulier d'un dysfonctionnement, d'un module de stockage en fonction :
- d'une température dudit module, et/ou
- d'une tension aux bornes dudit module.

En particulier, un module peut être défaillant lorsqu'il présente :
- un niveau de charge restante nul, ou inférieur ou égal à une valeur prédéterminée, par exemple 0,1% de la CCM dudit module ;
- une température qui n'est pas comprise dans une plage de températures prédéterminées, telle que par exemple 50°C à 120°C ; et/ou
- une tension aux bornes dudit module qui n'est pas comprise dans une plage de tensions prédéterminées, telle que par exemple 190V à 470V.

Le procédé selon l'invention peut en outre comprendre, pour chaque module, une mesure d'au moins un, en particulier de chacun, des paramètres suivants :
- un niveau de charge restante (NCR) dudit module, par exemple par une jauge de charge ;
- une température dudit module, par exemple par un thermomètre ou un thermocouple ; et/ou
- une tension aux bornes dudit module, par exemple par un Voltmètre.

L'un au moins de ces paramètres peut être utilisé pour déterminer si le module est défaillant ou non.

Alternativement ou en plus, l'un au moins de ces paramètres, par exemple le niveau de charge restante (NCR), peut être utilisé pour déterminer si un basculement vers un autre groupe doit être réalisé ou non.

Selon un autre aspect de la même invention, il est proposé un système de gestion d'une pluralité de modules de stockage d'énergie électrique rechargeables d'une installation d'alimentation électrique, en particulier stationnaire, lesdits modules comprenant, chacun, au moins une batterie rechargeable électrochimique, en particulier de type LMP®, et étant agencés en parallèle les uns avec les autres, ledit système comprenant :
- pour chaque module, un moyen de connexion/déconnexion individuel, permettant de mettre en décharge ledit module indépendamment des autres modules, et
- au moins un superviseur pour commander, directement ou indirectement, chacun desdits moyens de connexion/déconnexion ;
ledit au moins un superviseur étant configuré pour mettre en œuvre toutes les étapes du procédé selon l'invention.

Selon encore un autre aspect de l'invention, il est proposé une installation d'alimentation électrique, en particulier stationnaire, comprenant une pluralité de modules de stockage d'énergie électrique rechargeables, lesdits modules comprenant, chacun, au moins une batterie rechargeable électrochimique, en particulier de type LMP®, et étant agencés en parallèle les uns avec les autres, lesdits modules étant gérés :
- conformément au procédé selon l'invention ; ou
- par un système selon l'invention.

Avantageusement, l'installation selon l'invention peut comprendre un moyen de production d'énergie électrique à partir d'une source renouvelable, tel qu'au moins un panneau solaire et/ou au moins une éolienne.

L'énergie produite par un tel moyen peut être utilisée pour recharger au moins un module de stockage d'énergie électrique rechargeable.

Alternativement, ou en plus, au moins un module de stockage d'énergie électrique rechargeable peut être rechargé depuis le secteur.

L'installation d'alimentation électrique selon l'invention peut être une station de recharge électrique pour véhicules électriques.

Alternativement, l'installation d'alimentation électrique selon l'invention peut être une installation d'alimentation électrique d'un bâtiment tel qu'un cinéma, d'un complexe tel qu'un terrain de sport, ou d'un appareil électrique/électronique de communication tel qu'une borne wifi ou une antenne, etc.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple non limitatif d'une installation d'alimentation électrique selon l'invention ;
- les FIGURES 2a et 2b sont des représentations schématiques de deux exemples non limitatifs de branchement en parallèle des modules de stockage d'énergie électrique d'une installation d'alimentation électrique selon l'invention, et en particulier de l'installation de la FIGURE 1 ;
- la FIGURE 3 est une représentation schématique, sous la forme d'un diagramme, d'un premier exemple non limitatif du procédé selon l'invention ;
- la FIGURE 4 est une représentation schématique, sous la forme d'un diagramme, d'un deuxième exemple non limitatif du procédé selon l'invention ; et
- les FIGURES 5a-5f sont des représentations schématiques du principe d'un exemple d'application du procédé de la FIGURE 3 dans le cas de l'installation de la FIGURE 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

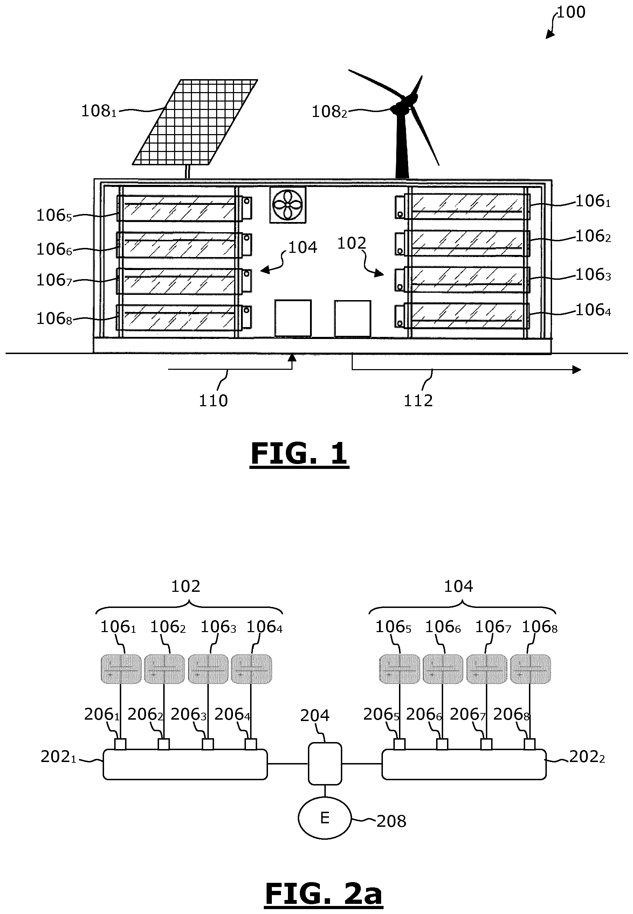

La FIGURE 1 est une représentation schématique d'un exemple non limitatif d'une installation d'alimentation électrique selon l'invention.

L'installation d'alimentation électrique 100, représentée sur la FIGURE 1, peut être une station de recharge électrique pour véhicules électriques tels que des bus électriques ou des voitures électriques, une installation d'alimentation d'un bâtiment, d'un complexe, d'un appareil de communication tel qu'une borne WIFI ou une antenne, etc.

L'installation 100 comprend un premier groupe 102 et un deuxième groupe 104 comprenant chacun quatre modules de stockages d'énergie électrique rechargeables, à savoir les modules 106₁-106₄ pour le groupe 102 et les modules 106₅-106₈ pour le groupe 104.

Chaque module de stockage d'énergie électrique rechargeable 106 comprend une ou plusieurs batteries de type LMP® (pour « Lithium Métal Polymère »). Les modules 106 sont tous identiques et fournissent une même puissance nominale.

Un ou plusieurs moyens 108 de production d'énergie électrique à partir d'une source renouvelable, tels que par exemple des panneaux solaires 108₁ ou une ou des éoliennes 108₂, peuvent être utilisés pour recharger les modules 106. Les moyens de production 108 peuvent faire partie, ou non, de l'installation 100.

Alternativement ou en plus, chaque module 106 peut être rechargé depuis un réseau de distribution d'énergie électrique, matérialisé par la ligne référencée 110.

L'installation 100 permet d'alimenter une borne de recharge, un complexe, et plus généralement une entité électrique, par l'intermédiaire d'un réseau électrique matérialisé par la ligne référencée 112. Un ou plusieurs superviseurs permettent de contrôler le fonctionnement de l'installation 100.

La FIGURE 2a est une représentation schématique d'un exemple non limitatif de branchement en parallèle de modules de stockage d'énergie électrique d'une installation selon l'invention, et en particulier dans l'installation 100 de la FIGURE 1.

Dans l'exemple représenté sur la FIGURE 2a, les modules 106₁-106₄ du groupe 102 sont branchés sur un module de gestion 202₁, également appelé superviseur de groupe, et les modules 106₅-106₈ du groupe 104 sont branchés sur un module de gestion 202₂, également appelé superviseur de groupe.

Les superviseurs de groupe 202₁ et 202₂ sont à leur tour branchés sur un superviseur central 204, qui lui-même est branché, directement ou indirectement, à une entité 208 à alimenter, notée « E », une telle entité pouvant être un véhicule électrique, ou un bâtiment, etc.

En particulier, chaque module 106₁-106₄ du groupe 102 est branché au superviseur de groupe 202₁ par l'intermédiaire d'un contacteur, respectivement 206₁-206₄, commandable par le superviseur de groupe 202₁ ou par le superviseur central 204. De manière similaire, chaque module 106₅-106₈ du groupe 104 est branché au superviseur de groupe 202₂ par l'intermédiaire d'un contacteur, respectivement 206₅-206₈, commandable par le superviseur de groupe 202₂ ou par le superviseur central 204.

Chaque contacteur 206ᵢ peut être commandé individuellement par le superviseur central 204, directement ou par l'intermédiaire des superviseurs de groupe 202₁-202₂, pour être mis soit dans un état fermé laissant passer le courant fourni par le module 106ᵢ, soit dans un état ouvert interdisant le passage du courant fourni par le module 106ᵢ.

Le superviseur central 204 comprend :
- un moyen de mesure (non représenté) d'un niveau de charge actuelle, ou restante, de chaque module 106 de manière individuelle,
- un moyen de mesure (non représenté) d'une température de chaque module 106 de manière individuelle, et/ou
- un moyen de mesure (non représenté) d'une tension aux bornes de chaque module 106 de manière individuelle.

Le superviseur central 204 est en outre configuré pour comparer chacune des valeurs mesurées pour chaque module, à une ou plusieurs valeurs prédéterminées, pour déterminer si ledit module est défaillant ou fonctionnel.

Bien entendu, la mesure et la comparaison de ces paramètres peuvent, alternativement être réalisées par un autre organe que le superviseur central, tel que par exemple par chaque superviseur de groupe 202₁-202₂.

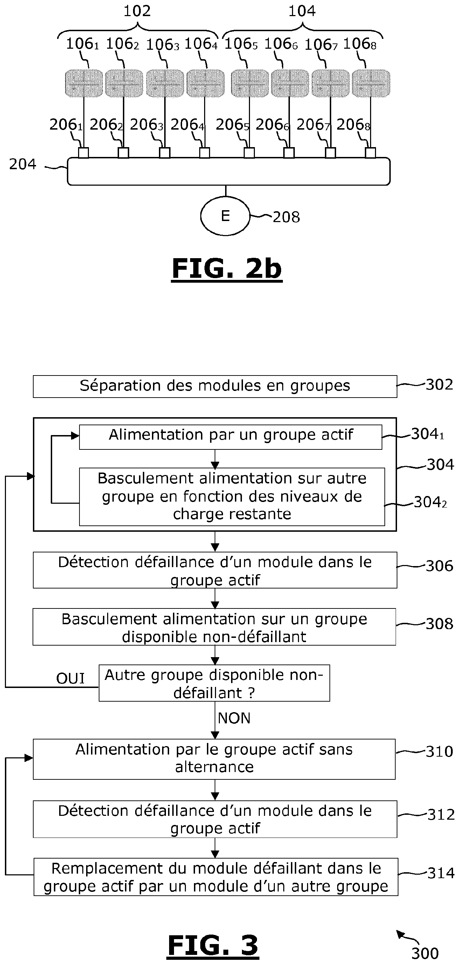

La FIGURE 2b est une représentation schématique d'un autre exemple non limitatif de branchement en parallèle de modules de stockage d'énergie d'une installation d'alimentation électrique selon l'invention, et en particulier de l'installation 100 de la FIGURE 1.

L'exemple représenté sur la FIGURE 2b comprend tous les éléments de l'exemple de la FIGURE 2a, sauf les superviseurs de groupe 202₁ et 202₂.

Dans l'exemple représenté sur la FIGURE 2b, les modules 106₁-106₈ sont directement branchés au superviseur central 204 par les contacteurs 206₁-206₈, sans utilisation des superviseurs de groupe 202₁ et 202₂. Les modules 106ᵢ sont alors tous agencés en parallèle.

La FIGURE 3 est une représentation schématique d'un premier exemple non limitatif d'un procédé de gestion selon l'invention.

Le procédé 300, représenté sur la FIGURE 3, comprend une étape 302 de séparation des modules en plusieurs groupes, par exemple en exactement deux groupes, tels que les groupes 102 et 104.

Lors de cette étape de séparation 302, la disposition physique des modules peut être prise en compte pour la constitution des groupes, par exemple comme représenté sur la FIGURE 2a. Alternativement, il est possible de ne pas prendre en compte une disposition physique des modules, par exemple comme représenté sur la FIGURE 2b.

Lors d'une étape 304, le procédé 300 réalise une alimentation alternée et à tour de rôle à partir de chacun des groupes. Pour ce faire, une étape 304₁ réalise une alimentation à partir de l'un des groupes. Le groupe en cours d'alimentation est appelé groupe actif et le ou les autres groupes sont appelé(s) groupe(s) disponible(s). Le niveau de charge restante (NCR) du groupe actif est surveillé lors de l'étape d'alimentation 304₁. Puis, en fonction d'une règle prédéterminée, une étape 304₂ réalise un basculement de l'alimentation vers un autre groupe disponible, et ainsi de suite.

Le basculement d'un groupe à l'autre, lors de l'étape 304₂ peut être réalisé en fonction des niveaux de charge restante (NCR) de chaque groupe et de la capacité de charge maximale (CCM) des groupes.

En particulier, le basculement du groupe actif vers un groupe disponible, peut être réalisé lorsque le NCR du groupe actif devient inférieur ou égal au NCR d'un groupe disponible d'une valeur prédéterminée, qui est égale à :
- 10% de la CCM d'un groupe lorsque tous les groupes présentent un NCR supérieur à 70% de la CCM ;
- 8% de la CCM d'un groupe lorsque le groupe le moins chargé présente un NCR compris entre 50% et 70% de la CCM ;
- 5% de la CCM lorsque le groupe le moins chargé présente un NCR compris entre 30% et 50% de la CCM ; et3% de la CCM lorsque le groupe le moins chargé présente un NCR inférieur à 30% de la CCM.

Un tel basculement permet d'optimiser la décharge de l'ensemble des modules et d'avoir un niveau de charge restante sensiblement équivalent pour chaque module.

Lors d'une étape 306, une défaillance est détectée au niveau d'un module de charge du groupe actif, pour au moins une de raisons suivantes :
- le module a un NCR insuffisant,
- le module présente une tension anormale à ses bornes, et/ou
- la température du module est anormale.

Suite à la détection d'un module défaillant, une étape 308 réalise un basculement de l'alimentation vers un groupe disponible qui devient le nouveau groupe actif.

Si après l'étape 308, il existe encore au moins un autre groupe disponible dont tous les modules sont fonctionnels, en plus du nouveau groupe actif, alors le procédé 300 reprend à l'étape 304 d'alimentation alternée sans prendre en compte le groupe défaillant.

Si après l'étape 308, il n'existe pas d'autre groupe disponible dont tous les modules sont fonctionnels, en plus du nouveau groupe actif, alors le procédé se poursuit avec une étape 310 qui réalise l'alimentation à partir dudit groupe actif uniquement. Il n'y a plus de basculement d'alimentation.

Après l'étape 310, une défaillance est détectée au niveau d'un module du groupe actif, lors d'une étape 312, pour au moins une de raisons suivantes :
- le module a un NCR insuffisant,
- le module présente une tension anormale à ses bornes, et/ou
- la température du module est anormale.

Suite à la détection d'un module défaillant dans le groupe actif, et comme il n'existe plus aucun autre groupe dont tous les modules sont non-défaillant, le procédé 300 comprend une étape 314 de remplacement du module défaillant dans le groupe actif par un module non-défaillant d'un autre groupe. Le groupe actif est alors reconstitué de manière virtuelle avec un module d'un autre groupe.

Le procédé 300 reprend alors à l'étape 310 avec le groupe actif reconstitué.

Dans le procédé 300 de la FIGURE 3, le remplacement d'un module défaillant d'un groupe est donc réalisé uniquement lorsque chaque groupe comprend un module défaillant. Bien entendu, l'invention n'est pas limitée à cette version du procédé.

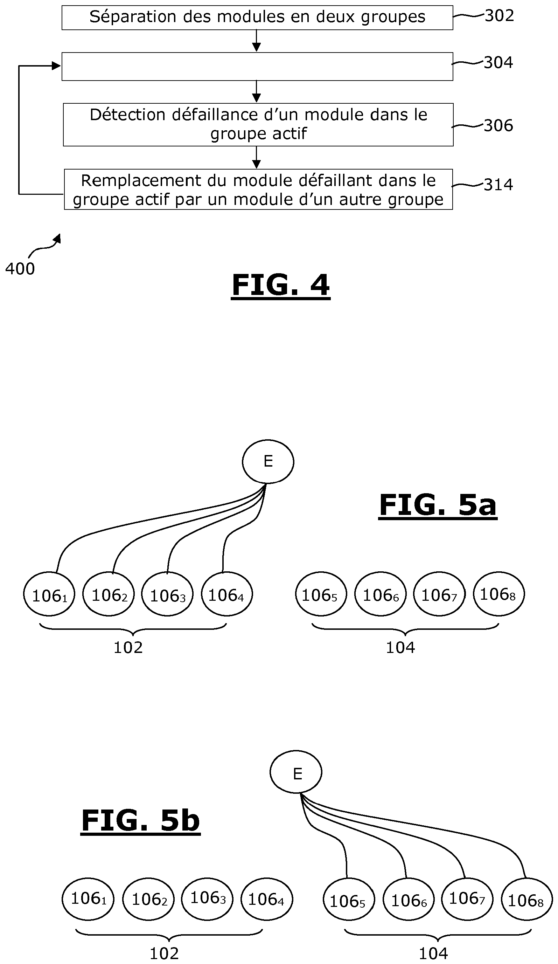

La FIGURE 4 est une représentation schématique d'un deuxième exemple non limitatif d'un procédé de gestion selon l'invention.

Le procédé 400, représenté sur la FIGURE 4, comprend les étapes 302-306 du procédé 300 de la FIGURE 3.

Cependant, dans le procédé 400 de la FIGURE 4, l'étape 306 de détection d'un module défaillant dans un module actif est suivie par l'étape 314 de remplacement du module défaillant dans le groupe actif, et ce, même s'il reste au moins un autre groupe dont tous les modules sont fonctionnels.

Autrement dit, dans le procédé 400 de la FIGURE 4, le remplacement d'un module défaillant d'un groupe actif est réalisé dès qu'un premier module défaillant est détecté.

Dans le procédé 400, lors de l'étape de remplacement 314, le module fonctionnel pour remplacer le module défaillant d'un groupe actif peut être choisi de manière alternée, à tour de rôle, dans les autres groupes disponibles.

Alternativement ou en plus, dans le procédé 400, lors de l'étape de remplacement 314, le module fonctionnel pour remplacer le module défaillant d'un groupe actif peut être choisi de manière alternée, et à tour de rôle, parmi les modules fonctionnels d'un autre groupe.

Les FIGURES 5a-5f sont des représentations schématiques du principe d'un exemple d'application du procédé 300 de la FIGURE 3 dans le cas de l'installation de la FIGURE 1.

Les FIGURE 5a-5c représentent une alimentation alternée d'une entité « E » à partir des groupes 102 et 104. Ainsi :
- sur la FIGURE 5a : le groupe 102 est le groupe actif utilisé pour l'alimentation de l'entité « E » et le groupe 104 est le groupe disponible ;
- sur la FIGURE 5b : l'alimentation de l'entité « E » est basculée sur le groupe 104, qui devient le groupe actif, et le groupe 102 devient le groupe disponible ; et

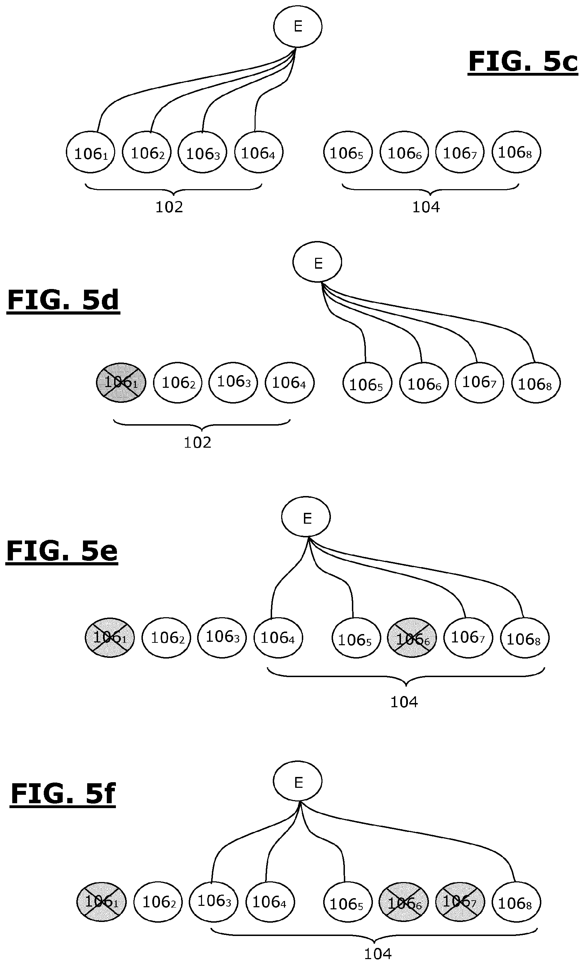

- sur la FIGURE 5c : l'alimentation de l'entité « E » est rebasculée sur le groupe 102, qui redevient le groupe actif, et le groupe 104 redevient le groupe disponible ;
- ainsi de suite.

La FIGURE 5d représente le cas où le module 106₁ du groupe 102 est défaillant. L'alimentation est basculée sur le groupe 104, sans remplacement du module défaillant 106₁. Comme il n'existe aucun autre groupe entièrement fonctionnel, l'alimentation est alors assurée de manière continue par le groupe 104.

La FIGURE 5e représente le cas où un module, à savoir le module 106₆, du groupe 104 est défaillant. Comme il n'existe aucun autre groupe entièrement fonctionnel, le module défaillant 106₆ est remplacé par l'un quelconque des modules fonctionnels 106₂-106₄ du groupe 102, à savoir le module 106₄ sur la FIGURE 5e. Le groupe 104 est alors virtuellement reconstitué et comprend les modules 106₄, 106₅, 106₇ et 106₈.

La FIGURE 5f représente le cas où un autre module, à savoir le module 106₇ du groupe 104 (virtuellement reconstitué) est défaillant. Comme il n'existe aucun autre groupe entièrement fonctionnel, le module défaillant 106₇ est remplacé par l'un quelconque des modules fonctionnels 106₂ ou 106₃ du groupe 102, à savoir le module 106₃ sur la FIGURE 5f. Le groupe 104 est alors reconstitué et comprend les modules 106₃, 106₄, 106₅ et 1068.

Bien entendu, l'invention n'est pas limitée aux exemples détaillés ci-dessus. En particulier, le nombre de modules de stockage, le nombre de groupes de modules, et le nombre de modules pour chaque groupe, ne sont pas limités à ceux donnés dans les exemples décrits ci-dessus, et correspondent au maximum de modules de stockage d'énergie dépendant notamment de l'autonomie et de la puissance souhaitée au niveau de l'installation.

L'invention est destinée à toute application stationnaire nécessitant une telle installation.

## Revendications

1. Procédé (300;400) de gestion d'une pluralité de modules (106₁-106₈) de stockage d'énergie électrique rechargeables d'une installation d'alimentation électrique (100), lesdits modules (106) comprenant, chacun, au moins une batterie rechargeable électrochimique lithium-métal-polymère, et étant agencés en parallèle les uns avec les autres, ledit procédé (300;400) comprenant :
- une séparation (302) desdits modules (106) en au moins deux groupes (102, 104), et
- une alimentation (304) à partir d'un desdits groupes (102, 104) à la fois ;
ledit procédé (300;400) comprenant en outre une étape (314) de remplacement d'un module défaillant (106₆, 106₇) d'un groupe (104), dit groupe actif, en cours d'alimentation, par un module (106₃, 106₄) disponible d'un autre groupe (102), dit groupe disponible.

2. Procédé (400) selon la revendication précédente, **caractérisé en ce que** l'étape de remplacement (314) est réalisée dès qu'un des groupes comporte un module défaillant.

3. Procédé (300) selon la revendication 1, **caractérisé en ce que** l'étape de remplacement (314) est réalisée uniquement lorsque chaque groupe (102, 104) comporte un module défaillant.

4. Procédé (300 ; 400) selon l'une quelconque des revendications précédentes, **caractérisé en ce que** l'étape de remplacement (314) est réalisée de sorte à maintenir un nombre constant de modules (106) dans le groupe actif (102, 104).

5. Procédé (300 ; 400) selon l'une quelconque des revendications précédentes, **caractérisé en ce qu'**il comprend un basculement (304₂) de l'alimentation d'un groupe (102, 104) à l'autre (104, 102), réalisé lorsque le niveau de charge restante du groupe actif est inférieur ou égal au niveau de charge restante d'au moins un groupe disponible, d'une valeur prédéterminée.

6. Procédé (300 ; 400) selon la revendication 5, **caractérisé en ce que** la valeur prédéterminée correspond à un pourcentage d'une capacité de charge maximale, ou d'un niveau de charge restante, de l'un au moins des groupes (102, 104).

7. Procédé (300 ; 400) selon l'une quelconque des revendications 5 ou 6, **caractérisé en ce que** la valeur prédéterminée est variable en fonction du niveau de charge totale disponible au niveau de chaque groupe (102, 104).

8. Procédé (300 ; 400) selon l'une quelconque des revendications précédentes, **caractérisé en ce que** chaque groupe (102, 104) comprend un nombre identique de modules.

9. Procédé (300 ; 400) selon l'une quelconque des revendications précédentes, **caractérisé en ce qu'**il comprend une détection (306, 312) d'une défaillance d'un module de stockage en fonction :
- d'un niveau de charge restante dudit module,
- d'une température dudit module, et/ou
- d'une tension aux bornes dudit module.

10. Procédé (300 ; 400) selon l'une quelconque des revendications précédentes, **caractérisé en ce qu'**il comprend une mesure, pour chaque module, d'au moins un des paramètres suivants :
- un niveau de charge restante dudit module,
- une température dudit module, et/ou
- une tension à ses bornes.

11. Système de gestion d'une pluralité de modules (106₁-106₈) de stockage d'énergie électrique rechargeables d'une installation d'alimentation électrique, lesdits modules (106₁-106₈) comprenant, chacun, au moins une batterie rechargeable électrochimique lithium-métal-polymère, et étant agencés en parallèle les uns avec les autres, ledit système comprenant :
- pour chaque module (106₁-106₈), un moyen (206₁-206₈) de connexion/déconnexion individuel, permettant de mettre en décharge ledit module indépendamment des autres modules, et
- au moins un superviseur (202₁-202₂, 204) pour commander, directement ou indirectement, chacun desdits moyens de connexion/déconnexion (206₁-206₈) ;
ledit au moins un superviseur (202₁-202₂, 204) étant configuré pour mettre en œuvre toutes les étapes du procédé (300 ; 400) selon l'une quelconque des revendications précédentes.

12. Installation d'alimentation électrique (100) comprenant une pluralité de modules de stockage d'énergie électrique rechargeables (106), lesdits modules (106) comprenant, chacun, au moins une batterie rechargeable électrochimique lithium-métal-polymère, et étant agencés en parallèle les uns avec les autres, lesdits modules étant gérés :
- conformément au procédé (300 ; 400) selon l'une quelconque des revendications 1 à 10 ; ou
- par un système selon la revendication 11.

13. Installation (100) selon la revendication précédente, **caractérisée en ce qu'**elle comprend un moyen (108₁, 108₂) de production d'énergie électrique à partir d'une source renouvelable, tel qu'au moins un panneau solaire (108₁) et/ou au moins une éolienne (1082).

14. Installation (100) selon l'une quelconque des revendications 12 ou 13, **caractérisée en ce qu'**il s'agit :
- d'une station de recharge électrique pour véhicules électriques, ou
- d'une installation d'alimentation électrique d'un bâtiment, d'un complexe ou d'un appareil électrique/électronique de communication.

## Patentansprüche

1. Verfahren (300; 400) zum Verwalten einer Vielzahl von wiederaufladbaren Modulen (106₁-106₈) zur Speicherung elektrischer Energie einer Stromversorgungsanlage (100), wobei die Module (106) jeweils wenigstens eine wiederaufladbare elektrochemische Lithium-Metall-Polymer-Batterie umfassen und parallel zueinander angeordnet sind, wobei das Verfahren (300; 400) umfasst:
- eine Trennung (302) der Module (106) in wenigstens zwei Gruppen (102, 104) und
- eine Versorgung (304) aus jeweils einer der Gruppen (102, 104);
wobei das Verfahren (300; 400) ferner einen Schritt (314) zum Ersetzen eines fehlerhaften Moduls (106₆, 106₇) einer Gruppe (104), einer sogenannten aktiven Gruppe, während der Versorgung durch ein verfügbares Modul (106₃, 106₄) einer anderen Gruppe (102), einer sogenannten verfügbaren Gruppe, umfasst.

2. Verfahren (400) nach dem vorhergehenden Anspruch, **dadurch gekennzeichnet, dass** der Schritt des Ersetzens (314) durchgeführt wird, sobald eine der Gruppen ein fehlerhaftes Modul umfasst.

3. Verfahren (300) nach Anspruch 1, **dadurch gekennzeichnet, dass** der Schritt des Ersetzens (314) nur dann durchgeführt wird, wenn jede Gruppe (102, 104) ein fehlerhaftes Modul aufweist.

4. Verfahren (300; 400) nach einem der vorhergehenden Ansprüche, **dadurch gekennzeichnet, dass** der Schritt des Ersetzens (314) durchgeführt wird, um eine konstante Anzahl von Modulen (106) in der aktiven Gruppe (102, 104) aufrechtzuerhalten.

5. Verfahren (300; 400) nach einem der vorhergehenden Ansprüche, **dadurch gekennzeichnet, dass** es ein Umschalten (304₂) der Versorgung von einer Gruppe (102, 104) zur anderen (104, 102) umfasst, das durchgeführt wird, wenn der Restladungspegel der aktiven Gruppe um einen vorbestimmten Wert kleiner als der oder gleich dem Restladungspegel von wenigstens einer verfügbaren Gruppe ist.

6. Verfahren (300; 400) nach Anspruch 5, **dadurch gekennzeichnet, dass** der vorbestimmte Wert einem Prozentsatz einer maximalen Ladekapazität oder eines Restladungspegels von wenigstens einer der Gruppen (102, 104) entspricht.

7. Verfahren (300; 400) nach einem der Ansprüche 5 oder 6, **dadurch gekennzeichnet, dass** der vorbestimmte Wert in Abhängigkeit von dem Gesamtladungspegel, welcher im Bereich einer jeden Gruppe (102, 104) verfügbar ist, variabel ist.

8. Verfahren (300; 400) nach einem der vorhergehenden Ansprüche, **dadurch gekennzeichnet, dass** jede Gruppe (102, 104) eine identische Anzahl von Modulen umfasst.

9. Verfahren (300; 400) nach einem der vorhergehenden Ansprüche, **dadurch gekennzeichnet, dass** es eine Erkennung (306, 312) eines Ausfalls eines Speichermoduls umfasst, in Abhängigkeit von:
- einem Restladungspegel des Moduls,
- einer Temperatur des Moduls und/oder
- einer Spannung an den Anschlüssen des Moduls.

10. Verfahren (300; 400) nach einem der vorhergehenden Ansprüche, **dadurch gekennzeichnet, dass** es für jedes Modul eine Messung von wenigstens einem der folgenden Parameter umfasst:
- einem Restladungspegel des Moduls,
- einer Temperatur des Moduls und/oder
- einer Spannung an seinen Anschlüssen.

11. System zum Verwalten einer Vielzahl von wiederaufladbaren Modulen (106₁-106s) zur Speicherung elektrischer Energie einer Stromversorgungsanlage, wobei die Module (106₁-106₈) jeweils wenigstens eine wiederaufladbare elektrochemische Lithium-Metall-Polymer-Batterie umfassen und parallel zueinander angeordnet sind, wobei das System umfasst:
- für jedes Modul (106₁-106₈) eine individuelle Verbindungs-/Trennungseinrichtung (206₁-206₈), die ermöglicht, das Modul unabhängig von den anderen Modulen zu entladen, und
- wenigstens einen Überwacher (202₁-202₂, 204), um eine jede der Verbindungs-/Trennungseinrichtungen (206₁-206₈) direkt oder indirekt zu steuern;
wobei der wenigstens eine Überwacher (202₁-202₂, 204) dazu ausgelegt ist, alle Schritte des Verfahrens (300; 400) nach einem der vorhergehenden Ansprüche durchzuführen.

12. Stromversorgungsanlage (100), die eine Vielzahl von wiederaufladbaren Modulen zur Speicherung elektrischer Energie (106) umfasst, wobei die Module (106) jeweils wenigstens eine wiederaufladbare elektrochemische Lithium-Metall-Polymer-Batterie umfassen und parallel zueinander angeordnet sind, wobei die Module:
- entsprechend dem Verfahren (300; 400) nach einem der Ansprüche 1 bis 10 oder
- durch ein System nach Anspruch 11 verwaltet werden.

13. Anlage (100) nach dem vorhergehenden Anspruch, **dadurch gekennzeichnet, dass** sie eine Einrichtung (108₁, 108₂) zur Erzeugung elektrischer Energie aus einer erneuerbaren Quelle, wie wenigstens einem Solarpanel (108₁) und/oder einer Windkraftanlage (108₂) umfasst.

14. Anlage (100) nach einem der Ansprüche 12 oder 13, **dadurch gekennzeichnet, dass** es sich:
- um eine elektrische Ladestation für Elektrofahrzeuge oder
- um eine Anlage zur Stromversorgung eines Gebäudes, eines Komplexes oder eines elektrischen/elektronischen Kommunikationsgerätes handelt.

## Claims

1. A method (300;400) for managing a plurality of rechargeable electrical energy storage modules (106₁-106₈) of an electrical supply installation (100), said modules (106) each comprising at least one rechargeable electrochemical lithium-metal-polymer battery, and being arranged in parallel with one another, said method (300;400) comprising:
- separating (302) said modules (106) into at least two groups (102,104), and
- supplying (304) from one of said groups (102,104) at a time;
said method (300;400) also comprising a step (314) of replacing a failing module (106₆,106₇) of a group (104), called active group, in the process of supply, with an available module (106₃,106₄) of another group (102), called available group.

2. The method (400) according to the preceding claim, **characterized in that** the replacement step (314) is carried out as soon as one of the groups includes a failing module.

3. The method (300) according to claim 1, **characterized in that** the replacement step (314) is carried out only when each group (102,104) includes a failing module.

4. The method (300;400) according to any one of the preceding claims, **characterized in that** the replacement step (314) is carried out so as to maintain a constant number of modules (106) in the active group (102, 104).

5. The method (300;400) according to any one of the preceding claims, **characterized in that** it comprises switching (304₂) the supply from one group (102,104) to the other (104,102), carried out when the remaining charge level of the active group is less than, by a predetermined value, or equal to, the remaining charge level of at least one available group.

6. The method (300;400) according to claim 5, **characterized in that** the predetermined value corresponds to a percentage of a maximum charge capacity, or a remaining charge level, of at least one of the groups (102,104).

7. The method (300;400) according to any one of claims 5 or 6, **characterized in that** the predetermined value is variable as a function of the total charge level available in each group (102,104).

8. The method (300;400) according to any one of the preceding claims, **characterized in that** each group (102,104) comprises an identical number of modules.

9. The method (300;400) according to any one of the preceding claims, **characterized in that** it comprises detecting (306,312) failure of a storage module as a function of:
- a remaining charge level of said module,
- a temperature of said module, and/or
- a voltage at the terminals of said module.

10. The method (300;400) according to any one of the preceding claims, **characterized in that** it comprises measuring, for each module, at least one of the following parameters:
- a remaining charge level of said module,
- a temperature of said module, and/or
- a voltage at the terminals thereof.

11. A system for managing a plurality of rechargeable electrical energy storage modules (106₁-106₈) of an electrical supply installation, said modules (106₁-106₈) each comprising at least one rechargeable electrochemical lithium-metal-polymer battery, and being arranged in parallel with one another, said system comprising:
- for each module (106₁-106₈), a means (206₁-206₈) for individual connection/disconnection, making it possible to place said module on discharge independently of the other modules, and
- at least one supervisor (202₁-202₂,204) for controlling, directly or indirectly, each of said connection/disconnection means (206₁-206₈);
said at least one supervisor (202₁-202₂, 204) being configured to implement all the steps of the method (300;400) according to any one of the preceding claims.

12. An electrical supply installation (100) comprising a plurality of rechargeable electrical energy storage modules (106), said modules (106) each comprising at least one rechargeable electrochemical lithium-metal polymer-battery, and being arranged in parallel with one another, said modules being managed:
- according to the method (300;400) according to any one of claims 1 to 10; or
- by a system according to claim 11.

13. The installation (100) according to the preceding claim, **characterized in that** it comprises a means (108₁,108₂) for producing electrical energy from a renewable source, such as at least one solar panel (108₁) and/or at least one wind turbine (108₂).

14. The installation (100) according to any one of claims 12 or 13, **characterized in that** it is:
- an electrical charging station for electric vehicles, or
- an electrical supply installation of a building, a complex or an electrical/electronic communication device.
